# EUROPEAN PATENT APPLICATION

(11) **EP 4 711 940 A1**
(43) Date of publication of application: **18.03.2026**
(21) Application number: 25202296.7
(22) Date of filing: 15.09.2025
(51) Int. Cl.: G06F 13/42

(54) **APPARATUS, SYSTEM AND/OR METHOD FOR PROVIDING A DATA INDEX COMMUNICATION PROTOCOL FOR A VEHICLE**

(30) Priority: 16.09.2024 US 202418885976
(71) Applicant: Harman Becker Automotive Systems GmbH, 76307 Karlsbad (DE)
(72) Inventor: PAUL, Bapi, 560016 Bangalore (IN)
(74) Representative: Rummler, Felix

(57) **Abstract**

An apparatus for performing in-vehicle communication, the vehicle comprising a memory device; and a master controller including the memory device, the master controller is operatively coupled to one or more slave controllers via a data communication bus, the master controller being programmed to transmit a message including a digital index indicator (DII), and one or more data frames to a slave controller of the one or more slave controllers via the data communication bus, and the slave controller including an onboard storage, is programmed to responsive to receiving the message, identify one of the data frames as including an index identification using the DII, load a registry value from the onboard storage using the index identification, and perform a vehicle operation using the registry value.

## Description

### TECHNICAL FIELD

The present disclosure generally relates to an internal communication of a vehicle. More specifically, the present disclosure relates to an internal communication of a vehicle involving an improved Inter-Integrated Circuit (I2C) protocol.

### BACKGROUND

Modern vehicles are provided with various controllers and devices in communication with each other to perform various functions. More specifically, the vehicles may be provided with a plurality of hardware devices such as audio amplifiers, displays to provide various audio and/or video multi-media features. The hardware devices may utilize one or more communication protocols for communications. In some examples, an Inter-Integrated Circuit (I2C or I²C) protocol may be used for controller programming and configurations.

A master controller may transmit a message to a slave controller using the I2C protocol. The message may include an address frame indicative of the address of the destination slave controller and one or more data frames. Despite the I2C protocol is simple to implement, it is also associated with drawbacks such as slow data exchange due to protocol overhead, the lack of confidentiality, and the lack of robust error detection on data corruptions.

### SUMMARY

An apparatus for performing in-vehicle communication, the vehicle comprising a memory device; and a master controller including the memory device, the master controller is operatively coupled to one or more slave controllers via a data communication bus, the master controller being programmed to transmit a message including a digital index indicator (DII), and one or more data frames to a slave controller of the one or more slave controllers via the data communication bus, and the slave controller including an onboard storage, is programmed to responsive to receiving the message, identify one of the data frames as including an index identification using the DII, load a registry value from the onboard storage using the index identification, and perform a vehicle operation using the registry value.

A method for performing in-vehicle communication, the method comprising transmitting, via a master controller, a message including a digital index indicator (DII), and one or more data frames to a slave controller of the one or more slave controllers via a data communication bus, wherein the master controller includes a memory device, and is operatively coupled to a slave controller via the data communication bus, responsive to receiving the message, identifying, via the slave controller including an onboard storage, one of the data frames as including an index identification using the DII, loading, via the slave controller, a registry value from the onboard storage using the index identification, and performing, via the slave controller, a vehicle operation using the registry value.

A non-transitory computer-readable medium comprising instructions, when executed by one or more controllers to perform in-vehicle communication, cause the one or more controllers to transmit, via a master controller, a message including a digital index indicator (DII), and one or more data frames to a slave controller of the one or more slave controllers via a data communication bus, wherein the master controller includes a memory device, and is operatively coupled to a slave controller via the data communication bus, and responsive to receiving the message, identify, via the slave controller, one of the data frames as including an index identification using the DII, wherein the slave controller includes an onboard storage, load, via the slave controller, a registry value from the onboard storage using the index identification, and perform, via the slave controller, a vehicle operation using the registry value.

### BRIEF DESCRIPTION OF THE DRAWINGS

For a better understanding of the invention and to show how it may be performed, embodiments thereof will now be described, by way of non-limiting example only, with reference to the accompanying drawings, in which:
Figure 1 illustrates an example block topology of a vehicle system having an in-vehicle network of one embodiment of the present disclosure.
Figure 2 illustrates a bit identifier diagram of an existing I2C protocol.
Figure 3 illustrates a bit identifier diagram of an improved I2C protocol of the present disclosure.
Figure 4 illustrates a flow diagram of a process for communicating between master controller and a slave controller of one example of the present disclosure.
Figure 5 illustrates a flow diagram of a process for communicating between master controller and a slave controller of another example of the present disclosure.
Figure 6 illustrates a flow diagram of a process for communicating between master controller and a slave controller of yet another example of the present disclosure.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

The present disclosure generally provides for a plurality of circuits or other electrical devices. All references to the circuits and other electrical devices, and the functionality provided by each, are not intended to be limited to encompassing only what is illustrated and described herein. While particular labels may be assigned to the various circuits or other electrical devices, such circuits and other electrical devices may be combined with each other and/or separated in any manner based on the particular type of electrical implementation that is desired. It is recognized that any circuit or other electrical device disclosed herein may include any number of microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof) and software which co-act with one another to perform operation(s) disclosed herein. In addition, any one or more of the electric devices may be configured to execute a computer-program that is embodied in a non-transitory computer readable medium that is programed to perform any number of the functions as disclosed.

The present disclosure proposes, among other things, a to an in-vehicle communication network utilizing an improved I2C protocol to enable more efficient data transmission between devices.

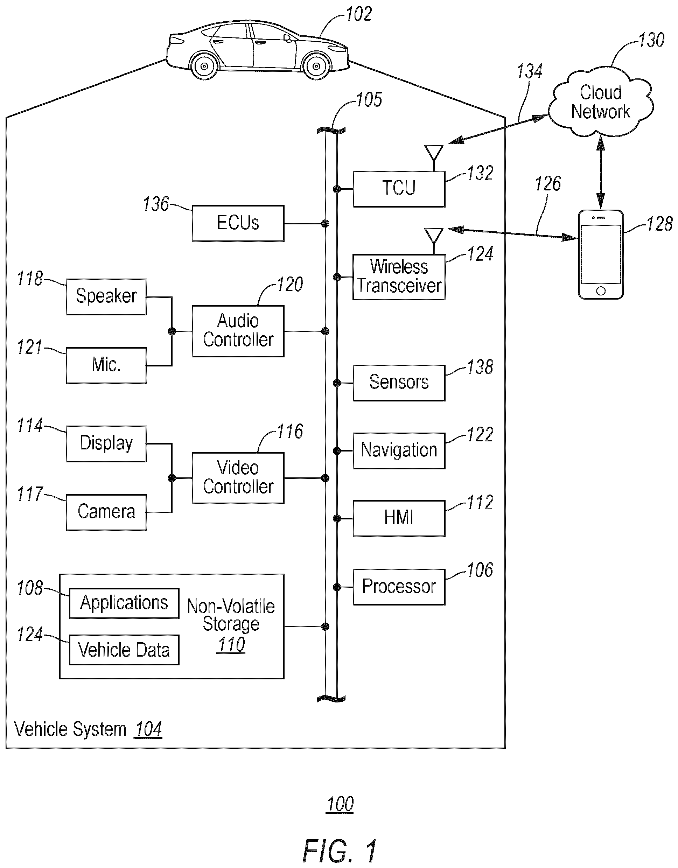

Referring to Figure 1, an example block topology of a system 100 of one embodiment of the present disclosure is illustrated. A vehicle 102 may include various types of automobiles, crossover utility vehicle (CUV), sport utility vehicle (SUV), truck, recreational vehicle (RV), boat, plane, or other mobile machine for transporting people or goods. In many cases, the vehicle 102 may be powered by an engine. As another possibility, the vehicle 102 may be a battery electric vehicle (BEV), a hybrid electric vehicle (HEV) powered by both an internal combustion engine and one or move electric motors, such as a series hybrid electric vehicle (SHEV), a plug-in hybrid electric vehicle (PHEV), a parallel/series hybrid vehicle (PSHEV), or a fuel-cell electric vehicle (FCEV). It should be noted that the illustrated system 100 is merely an example, and more, fewer, and/or differently located elements may be used.

As illustrated in Figure 1, the vehicle 102 may be provided with a vehicle system 104 including one or more processors 106 configured to perform instructions, commands, and other routines in support of the processes described herein. For instance, the vehicle system 104 may be configured to execute instructions of applications 108 to provide features such as vehicle operation controls, multimedia, or the like. Such instructions and other data may be maintained in a non-volatile manner using a variety of types of computer-readable storage medium 110. The computer-readable medium 110 (also referred to as a processor-readable medium or storage) includes any non-transitory medium that participates in providing instructions or other data that may be read by the processor 106 of the vehicle system 104. Computer-executable instructions may be compiled or interpreted from computer programs created using a variety of current and future programming languages and/or technologies.

The vehicle system 104 may be provided with one or more data communication busses or in-vehicle networks 105 (hereafter "the in-vehicle network 105") configured to enable the communication between various components of the vehicle 102. The in-vehicle network 105 may be configured to support various communication protocol. For instance, the in-vehicle network 105 may be configured to support, but is not limited to, one or more of an I2C network, a controller area network (CAN), an Ethernet network, and a media-oriented system transport (MOST), as some examples. Furthermore, the in-vehicle network 105, or portions of the in-vehicle network 105, may be a wireless network accomplished via Bluetooth low-energy (BLE), Wi-Fi, or the like. In the present example, the in-vehicle network 105 may be configured to support an improved I2C communication protocol as disclosed by the present disclosure (to be discussed in detail below).

The vehicle system 104 may be provided with various features allowing the vehicle users to interface with the vehicle system 104. For example, the computing platform 104 may receive input from human machine interface (HMI) controls 112 connected to the in-vehicle network 105 and configured to provide for user interaction with the vehicle 102. As an example, the vehicle system 104 may interface with one or more buttons, switches, knobs, touch screen or other HMI controls configured to invoke functions on the vehicle system 104 (e.g., navigation, audio/video playback, and etc.).

The vehicle system 104 may also drive or otherwise communicate with one or more displays 114 configured to provide visual output to vehicle users by way of a video controller 116 through the in-vehicle network 105. In some cases, the display 114 may be a touch screen further configured to receive user touch input via the video controller 116, while in other cases the display 114 may be a display only, without touch input capabilities. The vehicle system 104 may also drive or otherwise communicate with one or more cameras 117 configured to provide video input by way of the video controller 116 through the in-vehicle network 105. The cameras 117 may include an exterior camera (e.g., backup camera) to provide vehicle users with visual information about the exterior situation of the vehicle 102. Additionally or alternatively, the cameras 117 may include a plurality of camera lenses and configured to enable a surrounding view function. The cameras 117 may further include an in-cabin camera configured to capture images within the cabin of the vehicle 102. The video controller 116 may be configured to communicate with the display 114 and/or the camera 117 via a sub-network under the improved I2C communication protocol (to be discussed in detail below) wherein the video controller 116 may operate as a master controller and the display 114 and/or the camera 117 may operate as the slave controller(s).

The vehicle system 104 may also drive or otherwise communicate with one or more speakers 118 configured to provide audio output to vehicle users by way of an audio controller 120 connected to the in-vehicle network 105. The vehicle system 104 may also drive or otherwise communicate with one or more microphones 121 configured to capture audio input by way of the audio controller 120. The audio controller 120 may be configured to communicate with the speaker 118 and/or the microphone 121 via a sub-network under the improved I2C communication protocol (to be discussed in detail) wherein the audio controller 120 may operate as a master controller and the speaker 118 and/or the microphone 121 may operate as the slave controller(s).

The vehicle system 104 may also be provided with navigation and route planning features through a navigation controller 122 connected to the in-vehicle network 105 and configured to calculate navigation routes responsive to user input via e.g., the HMI controls 112, and output planned routes and instructions via the speaker 118 and/or the display 114 through the audio controller 120 and/or the video controller 116. Location data that is needed for navigation may be determined by the communication with multiple satellites. Map data used for route planning may be stored in the storage 110 as a part of the vehicle data 124. Navigation software may be stored in the storage 110 as one of the vehicle applications 108.

The vehicle system 104 may also be provided with wireless communication capabilities via a wireless transceiver 124 connected to the in-vehicle network 105 and configured to wirelessly communicate with a mobile device 128 of vehicle users via a wireless connection 126. The mobile device 128 may be any of various types of portable computing devices, such as cellular phones, tablet computers, wearable devices, smart watches, smart fobs, laptop computers, portable music players, or other device capable of communication with the vehicle system 104. The wireless transceiver 126 may be configured to support a variety of wireless communication protocols including Wi-Fi, Bluetooth, radio-frequency identification (RFID), near-field communication (NFC), and communicate with a compatible wireless transceiver (not shown) of the mobile device 128 to enable various functions. For instance, the vehicle user may perform audio and/or video phone calls by mobile device 128 through the vehicle system 104. Additionally or alternatively, the vehicle system 104 may be configured to access a cloud network 130 via the mobile device 128 through wireless connection technologies such as cellular network.

The vehicle system 104 may also be provided with a telematics control unit (TCU) 132 connected to the in-vehicle network 105 and configured to control telecommunication between vehicle 102 and the cloud network 130 through a wireless connection 134 (e.g., using a modem) in addition to or in lieu of via the mobile device 128. For instance, the vehicle system 104 may download and/or upload data from/to the cloud network 130 via the TCU 132 or through the mobile device 128. It is noted that the term cloud network is used as a general term in the present disclosure and may include any computing network involving servers, carriers, routers, computers, controllers, circuitry or the like configured to store data and perform data processing functions and facilitate communication between various entities.

The vehicle system 104 may also be provided with various electronic control units (ECUs) 136 connected to the in-vehicle network 105 and configured to perform various operations. For instance, the ECUs 136 may include a powertrain control module (PCM) configured to operate the vehicle powertrain (e.g., engine, motor, transmission) based on user inputs and sensor data. The ECUs 136 may further include a body control module (BCM) configured to perform vehicle body operations (e.g., light, door, window) based on user inputs and sensor data. The ECUs 136 may further include an autonomous driving controller (ADC) configured to provide autonomous driving features of the vehicle 102 based on user inputs and sensor data. The ECUs 136 may further include a heating, ventilation and air conditioning (HVAC) controller configured to provide vehicle cabin climate controls.

The vehicle system 104 may also include various vehicle sensors 138 connected to the in-vehicle network 105 and configured to capture the various sensor data to facilitate vehicle operations. The sensors data may be sent to the ECUs 168 and/or other components of the vehicle system 104 via the in-vehicle network 105.

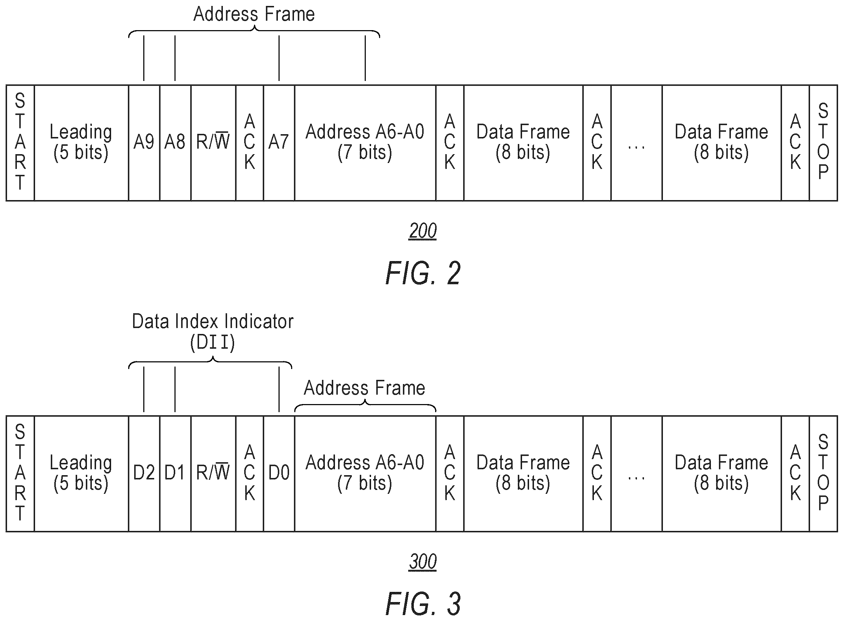

As discussed above, one or more components of the in-vehicle network 105 may be configured to communicate with other components using an improved I2C protocol proposed by the present disclosure. To better demonstrate the present disclosure, Figure 2 illustrates a bit identifier diagram of a message 200 under an existing I2C protocol, and Figure 3 illustrates a bit identifier diagram of an improved message 300 under the improved I2C protocol of the present disclosure.

Referring to Figure 2, a bit identifier diagram of a message 200 under the existing I2C protocol is illustrated. The message 200 may be generated and sent from a master controller to a slave controller. The I2C protocol may be configured to support a 7 or 10 bit address frame. In the present example, the message 200 includes, for example, a 10 bit address frame to identify the address of the destination slave controller. The message 200 further includes a plurality of data frames including data to be transmitted to the slave controller. The message 200 starts with a START condition which marks the initialization of the message 200 from the master controller and the master controller starts to occupy the serial data line. The message 200 terminates a STOP condition which marks the end of the message 200.

Immediately after the START condition bit, the message 200 further includes, for example, a 5-digit leading bit which introduces the 10 address bit configuration. As discussed above, the I2C protocol may support 7 or 10 address bits configurations. The leading bits may be used to identify the length of the address bits using "11110" indicative of the 10 bit address frame configuration.

Immediately after the leading bits, the message 200 further includes two address bits A9, A8, followed by a read/write identifying bit R/W, and followed by another address bit A7. An acknowledge bit ACK is placed immediately after the address bit A7. The read/write identifying bit R/W may be used by the master controller to identify whether the message 200 is to read from or write to the receiving slave controller. A recessive bit (e.g., logical 1) may indicate the master controller is reading data from the slave controller and a dominant bit (e.g., logical 0) may indicate the master controller is writing data to the slave controller. The acknowledge bit ACK, may be used by the slave controller to acknowledge the successful receipt of the data bits since the START condition. When sending ACK, the slave is in control of the serial data line.

Immediately after the address bit A7, the message 200 further includes 7 bits address frame A6, A5, A4, A3, A2, A1 and A0, followed by a second acknowledge bit ACK. The combination of the 7 bits address frame (including A6 to A0) and the 3 bits address frame (including A9, A8 and A7) forms the 10 bits address frame supported by the I2C protocol. The second acknowledge bit ACK is configured to allow the slave controller to acknowledge the successful receipt of the 7 address bits A6 to A0 transmitted after the last acknowledge bit.

Immediately after the second acknowledge bit ACK, the message 200 further includes one or more data frames (data bytes) each including 8 bits of data separated by one or more further acknowledgement bits ACK to acknowledge the successful receipt of the respective data frame. The message 200 terminates a STOP condition which marks the end of the message 200.

Referring to Figure 3, a bit identifier diagram of an improved message 300 under the improved I2C protocol is illustrated. With continuing reference to Figure 2, the improved message 300 is configured based on a modification of the message 200 under the I2C protocol. More specifically, the improved I2C protocol as proposed by the present disclosure replaces the last 3 bits of the address bits A7, A8 and A9 with 3 digital index indicator (DII) bits D0, D1 and D2 respectively configured to identify a data index stored in one or the data frames of the message 300 (to be discussed in detail below). As discussed above, the I2C protocol may support 7 or 10 bits to identify the address of the destination slave controller. In many cases, a 7 bit address frame is sufficient to identify the address of the slave controller and in those cases, the extra 3 bits of data are not efficiently utilized. The present disclosure proposes an improved I2C protocol to more efficiently utilize the extra 3 address bits A7, A8 and A9 as DII bits.

More specifically, the combination of the 3 DII bits may be used to switch between a normal mode utilizing the existing I2C protocol and an index mode utilizing the improved I2C protocol of the present disclosure. When the master controller sends the message 300 with the DII set to "000", the receiving slave controller switch to the normal mode and receives the data frame 300 under the existing I2C protocol. Thus, the improved I2C protocol of the present disclosure is compatible with the existing I2C protocol and its supporting devices. The present disclosure utilizes both the 5-digits leading bits and the 3-digit DII bits to indicate and enable the index mode utilizing the improved I2C protocol. More specifically, in the index mode, the leading bits are set to "11111" and the DII may be sets to a valve other than "000" (e.g., "001" to "111"), to identify the number/sequence of data byte included in the current data frame. For instance, if the DII is set to "010" in binary which is equal to "2" in decimal, the second data frame after the 7-bit address frame in the message 300 will be identified as an index identification. The receiving slave controller may use the data index to load one or more data values that has already been registered in the slave controller as instructed by the master controller without requiring to receive the data value directly from the master controller. Continuing with the example above, if the second data frame is of the index identification of "00000011" in binary which is equal to the value "3" in decimal, the receiving slave controller will retrieve the registered data value corresponding to index identification of the value "3" from a location storage onboard the slave controller. For instance, the receiving slave controller may store the following index table in a local storage:

**Table 1 Index Identification Table**

| Index Identification | Register Address | Register Value |
|---|---|---|
| 1 | 0x11111111 | 0x10000001 |
| 2 | 0x22222222 | 0x10030000 |
| 3 | 0x33333333 | 0x10A09B07 |

As illustrated in Table 1, the slave controller may use the index identification (e.g., "3" in decimal) to identify the register address 0x33333333 and thus load the register value of 0x10A09B07 without requiring receiving the register value from the master controller. Since the corresponding registered data value may be significantly larger than a byte of data limited to each data frame, the transmission efficiency of the network may be significantly improved.

It is noted that the terms master controller and slave controllers are used as general terms in the present disclosure and may refer to one or more vehicle components provided with data processing and/or communicating capabilities. In addition, the master controller and the slave controller may communicate via various serial data lines of the vehicle 102. For instance, the processor 106 may operate as the master controller and be configured to communicated with one or more ECUs 136 operating as the slave controller via the in-vehicle network 105 supporting the improved I2C protocol to perform various operations such as controller programming, power integrated circuit (IC) programming or the like. Additionally or alternatively, the master controller and the slave controller may communicate via one or more sub-networks of the vehicle 102. As an example, the audio controller may operate as the master controller and be configured to communicate with the speaker via the sub-network supporting the improved I2C protocol.

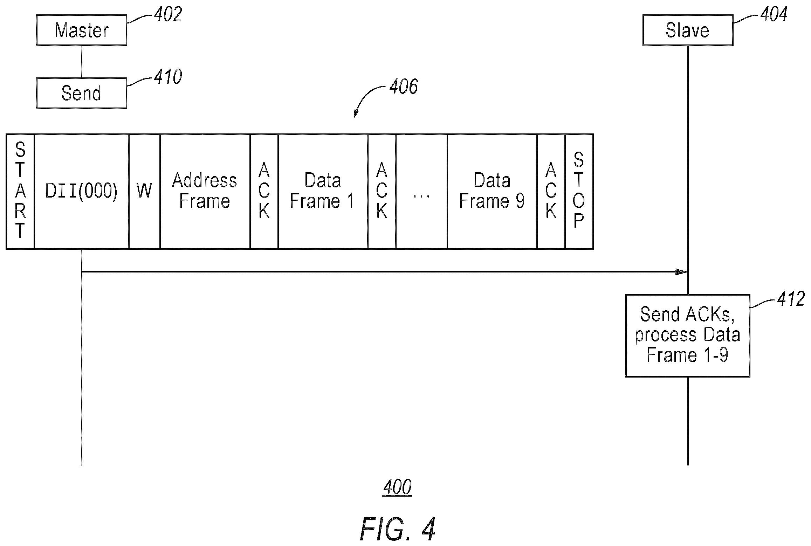

Referring to Figure 4, an example flow diagram of a process 400 for communicating between a master controller 402 and a slave controller 404 of one embodiment of the present disclosure is illustrated. With continuing reference to Figures 1-3, at operation 410, the master controller 402 initiates the communication with the message 406 addressed to the slave controller indicated in the address frame of the message 406. It is noted that the message 406 is presented in the modified form to show the 3 bits of DII together for simplicity and the data/bits within the message as illustrated do not necessarily correspond to the actual data/bits under the improved I2C protocol.

The message 406 is configured to write to the slave controller 404 as indicated by the read/write bit, and has the DII bits of "000" indicative of the normal mode transmission without an index. Following the address frame identifying the destination slave controller 404, the message 406 includes nine data frames (e.g., data frame 1 to data frame 9) in total.

Responsive to being identifies as the destination, at operation 412, the slave controller 404 sends the acknowledgement to the master controller 402 and starts to receive the nine data frames in sequence. With each success receipt of the data frame, the slave controller 404 transmits a corresponding acknowledgement bit accordingly. Responsive to successfully receiving each respective data frame and/or the entire message 406, the slave controller 404 processes the data included in the nine data frames and performs operations accordingly. For instance, the message 406 may be configured to program the slave controller 404. In this case, the slave controller 404 may perform the programming accordingly. Additionally or alternatively, the message 406 may be configured to requests the slave controller 404 to perform one or more operations (e.g., output a sound, output a light, output a haptic motion or the like). Responsive to receiving a processing the data frames, the slave controller 404 may perform the operations accordingly.

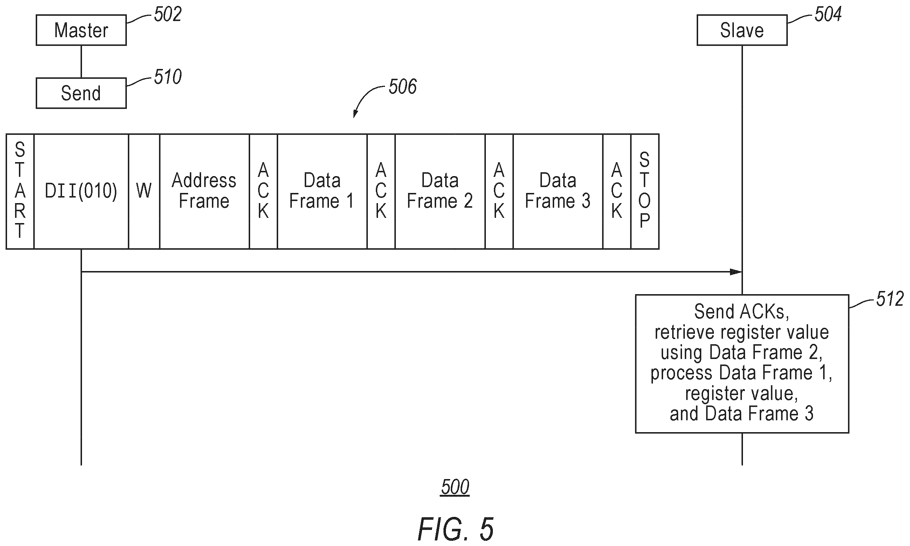

Referring to Figure 5, an example flow diagram of a process 500 for communicating between a master controller 502 and a slave controller 504 of another embodiment of the present disclosure is illustrated. With continuing reference to Figures 1-4, at operation 510, the master controller 502 initiates the communication with the message 506 designated to the slave controller 504 indicated in the address frame of the message 506. Similarly, the message 506 is presented in the modified form for simplicity.

The message 506 is configured to write to the slave controller 504 as indicated by the read/write bit, and has the DII bits of "010" indicative of the index mode transmission. In addition, the leading bits (not shown) are set to "11111" to indicate the index mode. Following the address frame identifying the destination slave controller 504, the message 506 includes three frames - data frame 1, data frame 2 and data frame 3. Since the DII bits "010" corresponds to the value 2 in decimal, the second data frame (e.g., data frame 2) includes the index identification while the other two frames (e.g., data frame 1 and data frame 3) do not include an index identification.

Responsive to being identified as the designation, at operation 512, the slave controller 504 sends the acknowledgement to the master controller 502 and starts to receive the data frames in sequence. With each success receipt of the data frame, the slave controller 504 transmits a corresponding acknowledgement bit accordingly. Responsive to successfully receiving the second data frame (data frame 2), the slave controller 504 retrieves the registered value from the local storage device. Continuing with the example illustrated in Table 1, if the data frame 2 is of the value of "00000001" which is equal to decimal value 1, the corresponding register value for index identification No. 1 is "0x10000001". Responsive to receiving the complete message 506 and retrieving the registered value, the slave controller 504 processes the data frame 1, the retrieved value, and data frame 3 accordingly. Similarly, if the message 506 may be configured to program the slave controller 504, the slave controller 504 may perform the programming accordingly. The slave controller 504 may also perform operations accordingly if the message 506 is configured to do so.

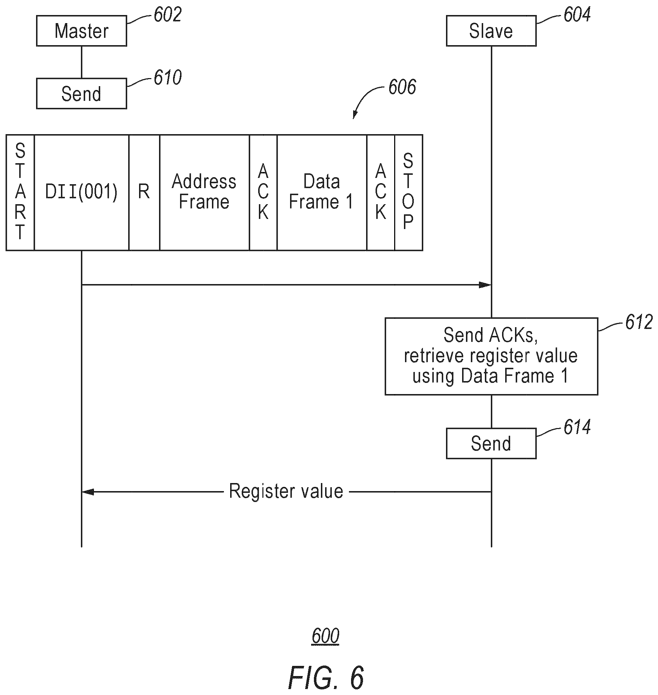

Referring to Figure 6, an example flow diagram of a process 600 for communicating between a master controller 602 and a slave controller 604 of yet another embodiment of the present disclosure is illustrated. In this example, the master controller 602 queries the slave controller about the registered value instead of writing data to the slave controller 604. With continuing reference to Figures 1-5, at operation 610 the master controller 602 initiates the communication with the message 606 addressed to the slave controller 604 indicated in the address frame of the message 606. Similarly, the message 606 is presented in the modified form for simplicity.

The message 606 is configured to read from the slave controller 604 as indicated by the read/write bit (e.g., R), and has the DII bits of "001" indicative of the index mode transmission. In addition, the leading bits (not shown) are set to "11111" to indicate the index mode. Following the address frame identifying the destination slave controller 604, the message 606 includes only one frame - data frame 1. Since the DII bits "001" corresponds to the value 1 in decimal, the first frame (e.g., data frame 1) includes the index identification.

Responsive to being identifies as the designation, at operation 612, the slave controller 604 sends the acknowledgement to the master controller 602 and starts to receive the data frame. Responsive to successfully receiving the data frame 1, the slave controller 404 sends the acknowledgement accordingly, and retrieves the registered value from the local storage device. Continuing with the example illustrated in Table 1, if the data frame 1 is of the value of "00000010" which is equal to decimal value 2, the corresponding register value for index identification No. 2 is "0x10030000".

At operation 614, the slave controller 604 sends the retrieved value to the master controller 602 to complete the query.

The algorithms, methods, or processes disclosed herein can be deliverable to or implemented by a computer, controller, or processing device, which can include any dedicated electronic control unit or programmable electronic control unit. Similarly, the algorithms, methods, or processes can be stored as data and instructions executable by a computer or controller in many forms including, but not limited to, information permanently stored on non-writable storage media such as read only memory devices and information alterably stored on writeable storage media such as compact discs, random access memory devices, or other magnetic and optical media. The algorithms, methods, or processes can also be implemented in software executable objects. Alternatively, the algorithms, methods, or processes can be embodied in whole or in part using suitable hardware components, such as application specific integrated circuits, field-programmable gate arrays, state machines, or other hardware components or devices, or a combination of firmware, hardware, and software components.

While exemplary embodiments are described above, it is not intended that these embodiments describe all possible forms encompassed by the claims. The words used in the specification are words of description rather than limitation, and it is understood that various changes may be made without departing from the spirit and scope of the disclosure. The words processor and processors may be interchanged herein, as may the words controller and controllers.

As previously described, the features of various embodiments may be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics may be compromised to achieve desired overall system attributes, which depend on the specific application and implementation. These attributes may include, but are not limited to strength, durability, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and may be desirable for particular applications.

## Claims

1. An apparatus for performing in-vehicle communication, the vehicle comprising:
a memory device; and
a master controller including the memory device, the master controller is operatively coupled to one or more slave controllers via a data communication bus, the master controller being programmed to:
transmit a message including a digital index indicator (DII), and one or more data frames to a slave controller of the one or more slave controllers via the data communication bus, and
the slave controller including an onboard storage, is programmed to:
responsive to receiving the message, identify one of the data frames as including an index identification using the DII,
load a registry value from the onboard storage using the index identification, and
perform a vehicle operation using the registry value.

2. The apparatus of claim 1, wherein the registry value is greater than the one of the data frames in data size.

3. The apparatus of claim 1 or 2, wherein the message further includes an address frame, and wherein the address frame is 7 bits long, and the DII is 3 bits long.

4. The apparatus of any preceding claim, wherein the slave controller is further programmed to:
transmit the registry value to the master controller via the data communication bus.

5. The apparatus of any preceding claim, wherein the message includes a plurality of data frames, and a first data frame of the plurality of data frames includes the index identification, and remaining data frames of the plurality of data frames include instruction data, the slave controller is further programmed to:
perform the vehicle operation using the registry value and the instruction data.

6. The apparatus of any preceding claim, wherein the vehicle operation includes outputting at least one of an audio sound, and a visual signal.

7. The apparatus of any preceding claim, wherein the vehicle operation includes performing programming the slave controller.

8. A method for performing in-vehicle communication, the method comprising:
transmitting, via a master controller, a message including a digital index indicator (DII), and one or more data frames to a slave controller of the one or more slave controllers via a data communication bus, wherein the master controller includes a memory device, and is operatively coupled to a slave controller via the data communication bus,
responsive to receiving the message, identifying, via the slave controller including an onboard storage, one of the data frames as including an index identification using the DII,
loading, via the slave controller, a registry value from the onboard storage using the index identification, and
performing, via the slave controller, a vehicle operation using the registry value.

9. The method of claim 8, wherein the registry value is greater than the one of the data frames in data size.

10. The method of claim 8 or 9, wherein the message further includes an address frame, and wherein the address frame is 7 bits long, and the DII is 3 bits long.

11. The method of any of claims 8 to 10, further comprising:
transmitting, via the slave controller, the registry value to the master controller via the data communication bus.

12. The method of any of claims 8 to 11, wherein the message includes a plurality of data frames, and a first data frame of the plurality of data frames includes the index identification, and remaining data frames of the plurality of data frames include instruction data,
the method further comprising:
performing, via the slave controller, the vehicle operation using the registry value and the instruction data.

13. The method of any of claims 8 to 12, wherein the vehicle operation includes outputting at least one of an audio sound, and a visual signal.

14. The method of any of claims 8 to 13, wherein the vehicle operation includes performing programming the slave controller.
